# FASCICULE DE BREVET EUROPEEN

(11) **EP 4 484 225 B1**
(45) Date de publication et mention de la délivrance du brevet: **24.12.2025**
(21) Numéro de dépôt: 24183117.1
(22) Date de dépôt: 19.06.2024
(51) Int. Cl.: B60R 13/02, B60Q 3/51, B60Q 3/54

(54) **PIÈCE DE GARNITURE INTÉRIEURE POUR VÉHICULES ET PROCÉDÉ DE FABRICATION D'UNE TELLE PIÈCE**
INNENVERKLEIDUNG FÜR FAHRZEUGE UND VERFAHREN ZUR HERSTELLUNG SOLCH EINES VERKLEIDUNGSTEILS
INTERIOR TRIM PART FOR VEHICLES AND METHOD FOR MANUFACTURING SUCH A PART

(30) Priorité: 30.06.2023 FR 2307002
(43) Date de publication de la demande: 01.01.2025
(73) Titulaire: SMRC Automotive Holdings Netherlands B.V., 1101 BA Amsterdam (NL)
(72) Inventeur: SAELEN, Marc, 59251 ALLENNES LES MARAIS (FR); PODVIN, Philippe, 62750 LOOS EN GOHELLE (FR)
(74) Mandataire: Ipsilon

(56) Documents cités:
- EP-A1- 3 495 212

## Description

La présente invention concerne le domaine des équipements intérieurs dans les véhicules, en particulier les pièces de garniture intérieure et notamment de telles pièces de garniture intégrant des éléments fonctionnels exerçant une fonction particulière. Elle a pour objet une pièce de garniture intérieure pour véhicule et un procédé de fabrication d'une telle pièce.

Les pièces de garniture (ou d'habillage) pour véhicule comprennent notamment, de manière non limitative, les tableaux de bord, les panneaux de portières (ou de portes), les panneaux de console centrale, les montants de fenêtres, les pièces d'ébénisterie analogues.

Parmi les pièces de garniture, certaines intègrent, en s'étendant dans le corps même de ces dernières, des éléments fonctionnels assurant des fonctions particulières telles que, par exemple, le chauffage, l'éclairage, la détection, la mesure, la réception, la transmission. Pour permettre leur activation, ces éléments fonctionnels nécessitent d'être connectés à une source d'énergie électrique et/ou à au moins un dispositif électronique lui-même alimenté ou comprenant une source d'énergie électrique. Un tel dispositif électronique permet de transmettre des informations à l'élément fonctionnel et/ou de traiter les informations/données générées et émises par l'élément fonctionnel.

Les pièces de garniture intégrant de telles fonctions fournissent ainsi des services utiles aux occupants (conducteurs et/ou passagers) des véhicules et améliorent leur confort. Elles présentent une face apparente (ou exposée) visible par les occupants du véhicule et comprennent une structure multicouche comportant au moins une couche support non visible par les occupants (connue également, par exemple, sous les noms de couche structurelle ou support ou substrat) et une couche d'aspect (connue également, par exemple, sous les noms de revêtement, revêtement de surface, couche d'habillage ou couche décorative) comportant ladite face apparente, et au moins un élément fonctionnel.

Un tel élément fonctionnel est intégré dans la pièce de garniture durant sa fabrication en étant disposé aussi près que possible de la face apparente afin de fournir les propriétés d'interaction les plus efficaces avec l'intérieur du véhicule et ses occupants. Il comprend une partie fonctionnelle fine (ou plate), c'est-à-dire de faible épaisseur, en contact sur toute sa surface avec la face interne de la couche d'aspect et une partie de connexion allongée formant une extension par rapport à sa partie fonctionnelle permettant la connexion électrique de la partie fonctionnelle à une source d'alimentation électrique et/ou à un dispositif électrique/électronique. Un tel dispositif électrique/électronique permet de transmettre des informations à l'élément fonctionnel et/ou de traiter les informations/données générées et émises par l'élément fonctionnel, c'est-à-dire par sa partie fonctionnelle.

La partie de connexion allongée de l'élément fonctionnel rejoint et traverse la couche support afin de rendre accessible et possible la connexion entre la partie de connexion, c'est-à-dire une extrémité (ou un embout) de connexion de cette dernière et la source d'alimentation électrique et/ou le dispositif électrique/électronique qui sont situés derrière la pièce de garniture.

On connait également des pièces de garniture qui comprennent en outre une couche de confort entre la couche d'aspect et la couche support. Une telle couche de confort est généralement une couche de matériau alvéolaire formée à partir d'une mousse expansée, par exemple de type polyuréthane. La couche de confort est réalisée par la technique du moussage dans un moule de moussage dédié à l'injection d'une mousse liquide expansive et dans lequel sont préalablement chargées la couche support et la couche d'aspect avec le ou les éléments fonctionnels. Le moule comprend une première partie appelée matrice (partie du moule en creux) dans laquelle est chargée la couche d'aspect et une deuxième partie, appelée poinçon, dans laquelle est chargée la couche support. Le moule est configuré pour laisser un espace de réception de la mousse liquide entre la couche d'aspect et la couche support. La mousse liquide expansive est injectée dans l'espace de réception, puis va s'expanser pour former la couche de confort.

Toutefois, l'intégration de l'élément fonctionnelle (ou plusieurs) dans une pièce de garniture intérieure comprenant une telle couche de confort pose un problème d'étanchéité. En effet, lors de l'injection de la mousse expansive liquide dans l'espace de réception du moule, et notamment lors de son expansion, il peut se produire des fuites de mousse dans et à travers le(s) trou(s) de passage pratiqué(s) dans la couche support pour permettre à la partie de connexion du ou des élément(s) fonctionnel(s) de traverser la couche support en vue de leur connexion électrique en passant par le ou les trou(s) de passage dédié(s). Par ailleurs, la gestion de l'insertion et du passage de la partie de connexion (partie connectique) de l'élément fonctionnel à travers le trou de passage dédié dans la couche support, du fait que l'élément fonctionnel et la couche support et son trou de passage en question sont positionnés sur des parties distantes du moule de moussage, n'est pas facile à gérer lors de la fermeture de ce moule.

La présente invention a pour but de pallier ces inconvénients en proposant une pièce de garniture intérieure pour véhicule et un procédé de réalisation d'une pièce de garniture empêchant toute fuite de matière destinée à réaliser la couche de confort, telle qu'une mousse liquide expansive, dans le(s) trou(s) de passage de la couche support, notamment lors de la réalisation de la pièce de garniture intérieure.

A cet effet, la pièce de garniture intérieure, selon la présente invention, pour véhicule, est telle que définie dans la revendication 1..

Une telle pièce de garniture intérieure selon la présente invention réalise ainsi, grâce au dispositif d'étanchéité une étanchéité entre le ou chaque trou de passage et la couche de confort ayant pour effet que la couche de confort s'étend entièrement en dehors du ou de chaque trou de passage. La couche de confort s'étend donc aussi en dehors du passage interne de la ou chaque bague d'étanchéité. Le dispositif d'étanchéité permet ainsi d'empêcher, notamment lors de la réalisation de la pièce de garniture intérieure dans un moule de moussage, plus particulièrement lors de l'injection d'une mousse expansive liquide dans le moule de moussage, par exemple une mousse expansive liquide du type polyuréthane, que la mousse s'introduise, notamment sous l'effet de son injection et/ou de son expansion, dans le(s) trou(s) de passage en occasionnant ainsi des fuites de mousse à travers la couche support.

La présente invention a également pour objet un procédé de réalisation d'une pièce de garniture selon la présente invention, se caractérisant en ce qu'il consiste à réaliser les étapes suivantes, en utilisant un moule de moussage dédié à l'injection de mousse liquide, par exemple une mousse expansive liquide du type polyuréthane, ledit moule comprenant une matrice et un poinçon dans lequel est préalablement chargée la couche support :
i) appliquer et fixer la partie fonctionnelle du ou de chaque élément fonctionnel sur la face interne de la couche d'aspect,
ii) charger la couche d'aspect dans la matrice avec sa face interne tournée vers l'intérieur du moule,
iii) fixer la ou chaque bague d'étanchéité, par sa première face d'étanchéité, sur la ou chaque partie fonctionnelle dédiée et/ou sur la face interne de la couche d'aspect en insérant la ou les partie(s) de connexion dédiée(s) dans le passage interne de la ou des bagues d'étanchéité de sorte que la ou chaque partie(s) de connexion traverse la bague d'étanchéité correspondante,
iv) fermer le moule M avec la couche support, ledit moule étant configuré de sorte que, lors de la fermeture, la ou chaque bague d'étanchéité dédiée au ou à l'un des trous de passage, d'une part, est disposée dans l'axe dudit trou de passage dédié pour permettre l'insertion dans ledit trou de passage dédié de la ou des partie(s) de connexion dédiée(s) et, d'autre part, vient en contact, par sa deuxième face d'étanchéité, avec la face interne de la couche support autour du trou de passage dédié,
v) injecter, dans l'espace séparant la couche d'aspect et la couche support, une mousse expansive ou injecter préalablement à la fermeture du moule entre l'étape iii) et l'étape iv) une mousse expansive dans la matrice. Dans cette étape l'expansion de la mousse vient au contact avec la surface, c'est-à-dire la face interne, de la couche support.
vi) après expansion et refroidissement de la mousse entourant la ou les bague(s) d'étanchéité en dehors du ou des trou(s) de passage, ouvrir le moule et démouler la pièce de garniture.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en perspective schématique d'une couche support d'une pièce de garniture selon la présente invention, selon une orientation montrant la face interne de la couche support dans laquelle est pratiquée un trou de passage traversant la couche support,
[Fig. 2] est une vue schématique en coupe transversale d'une couche d'aspect sur laquelle est fixé un élément fonctionnel, en vue du chargement de la couche d'aspect dans un moule de moussage,
[Fig. 3] est une vue schématique en coupe transversale d'un moule de moussage montant la matrice dans laquelle est chargée la couche d'aspect représentée sur la figure 2,
[Fig. 4] montre le moule de moussage représenté sur la figure 3 avec une bague d'étanchéité,
[Fig. 5] montre le moule de moussage représenté sur la figure 4 avec le poinçon, dans lequel est chargée la couche support, situé au-dessus de la première matrice,
[Fig. 6] montre le moule de moussage représenté sur la figure 5 à l'état fermé du moule de moussage,
[Fig. 7] montre le moule représenté sur la figure 6 après avoir injecté une mousse expansive liquide dans l'espace de réception du moule entre la couche d'aspect et la couche support,
[Fig. 8] montre le moule représenté sur la figure 7 dans l'étape suivante, à l'état ouvert du moule, avec la pièce de garniture intérieure extraite,
[Fig. 9a], [Fig. 9b], [Fig. 9c], [Fig. 9d] montrent plusieurs vues schématiques en perspective avec la bague d'étanchéité représentée sur l'une quelconque des figures 4 à 8, à savoir :

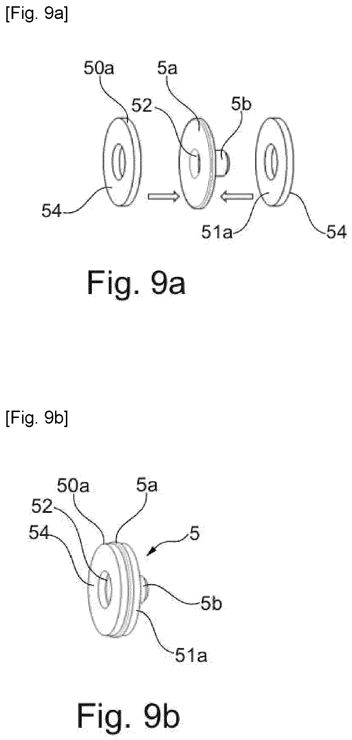

   [Fig. 9a] une vue en perspective et en éclaté de la bague d'étanchéité,
   [Fig. 9b] une vue en perspective de la bague d'étanchéité,

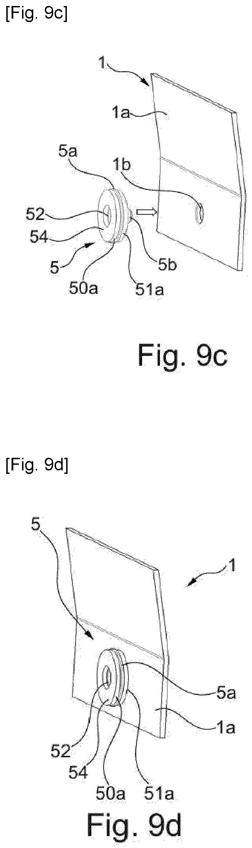

   [Fig. 9c] une vue en perspective de la bague d'étanchéité positionnée dans l'axe du trou de passage dédié de la couche support,
   [Fig. 9d] une vue en perspective la bague d'étanchéité fixée sur la face interne de la couche support autour du trou de passage,

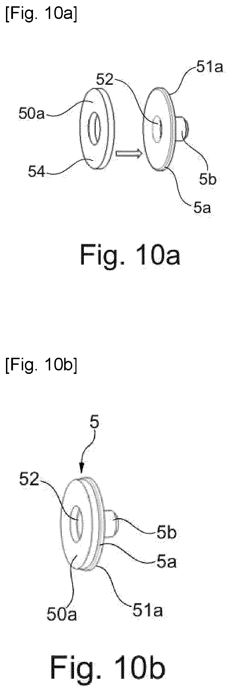

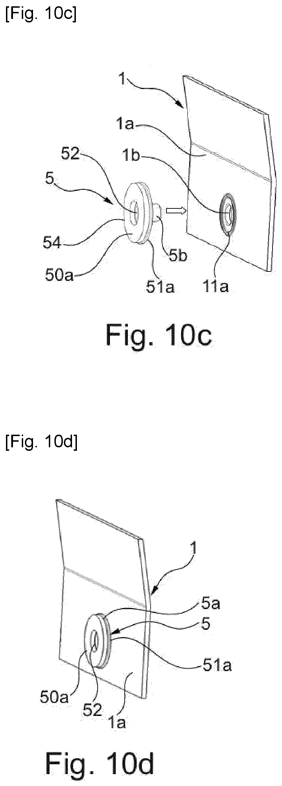

[Fig. 10a], [Fig. 10b], [Fig. 10c], [Fig. 10d] montrent plusieurs vues schématiques en perspective avec une bague d'étanchéité dans une autre forme de réalisation, à savoir :
   [Fig. 10a] une vue en perspective et en éclaté de la bague d'étanchéité,
   [Fig. 10b] une vue en perspective de la bague d'étanchéité,
   [Fig. 10c] une vue en perspective de la bague d'étanchéité positionnée dans l'axe du trou de passage dédié de la couche support dont la face interne comporte une excroissance entourant le trou de passage,
   [Fig. 10d] une vue en perspective la bague d'étanchéité appliquée contre l'excroissance intégrée dans la face interne de la couche support,

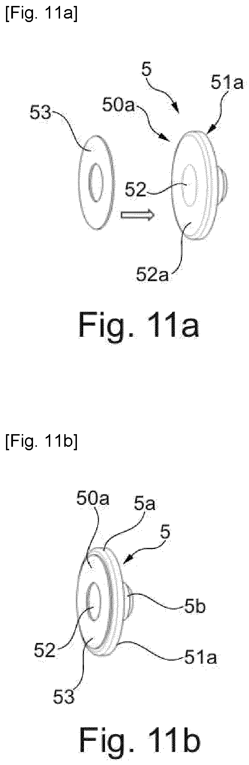

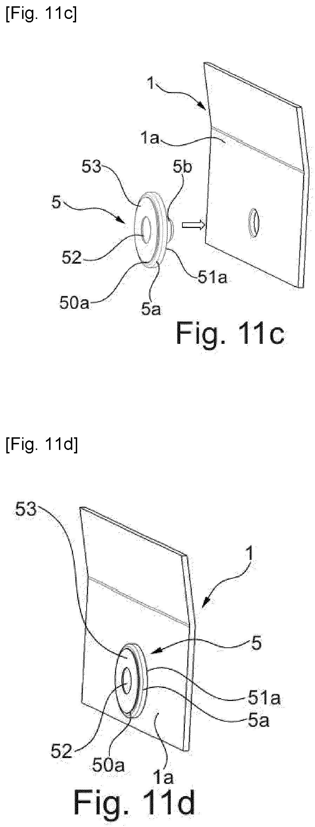

[Fig. 11a], [Fig. 11b], [Fig. 11c], [Fig. 11d] montrent plusieurs vues schématiques en perspective avec une bague d'étanchéité dans une autre forme de réalisation, à savoir :
   [Fig. 11a] une vue en perspective et en éclaté de la bague d'étanchéité,
   [Fig. 11b] une vue en perspective de la bague d'étanchéité,
   [Fig. 11c] une vue en perspective de la bague d'étanchéité positionnée dans l'axe du trou de passage dédié de la couche support,
   [Fig. 11d] une vue en perspective la bague d'étanchéité en contact avec la face interne de la couche support autour du trou de passage,

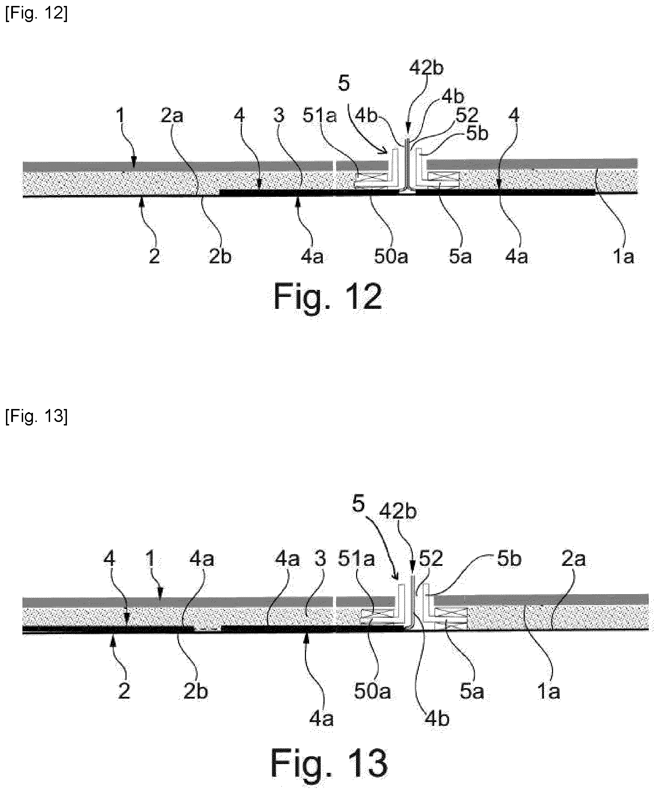

[Fig. 12] est une vue en coupe transversale schématique d'une pièce de garniture intérieure selon la présente invention dans une forme particulière montrant la première face d'étanchéité de la ou de l'une des bague(s) d'étanchéité fixée sur deux parties fonctionnelles respectivement de deux éléments fonctionnels dont les parties de connexion respectives traversent la bague d'étanchéité par son passage interne,
[Fig. 13] est une vue en coupe transversale schématique montrant la pièce de garniture intérieure représentée sur la figure 12, avec la première face d'étanchéité de la bague d'étanchéité fixée sur la partie fonctionnelle d'un élément fonctionnel lui-même relié à la partie fonctionnelle d'un autre élément fonctionnel,

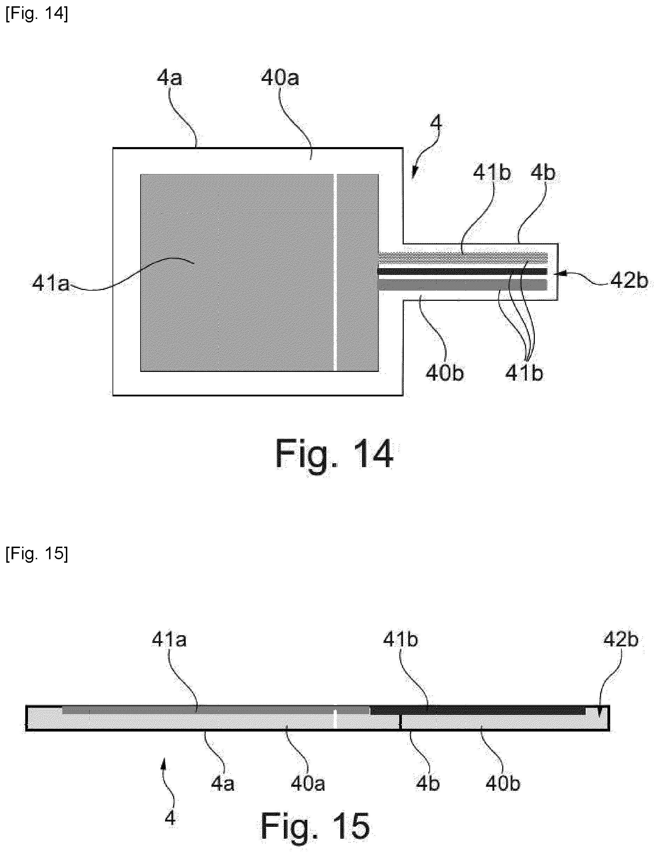

[Fig. 14] est une vue en plan schématique d'un élément fonctionnel,
[Fig. 15] est une vue en coupe transversale schématique de l'élément fonctionnel représenté sur la figure 14.

Les figures montrent une pièce de garniture intérieure pour véhicule, plus particulièrement pour véhicule terrestre. La pièce de garniture comprend :
- une couche support 1 présentant une face interne 1a comportant au moins un trou 1b de passage traversant la couche support 1,
- une couche d'aspect 2 présentant une face interne 2a tournée vers la face interne 1a de la couche support 1 et une face externe 2b définissant une face apparente de la pièce de garniture,
- et une couche de confort 3 s'étendant entre la couche d'aspect 2 et la couche support 1, c'est-à-dire remplissant l'espace disponible entre ces dernières.

Ces trois couches forment une structure multicouche dans la pièce de garniture qui présente une forme tridimensionnelle.

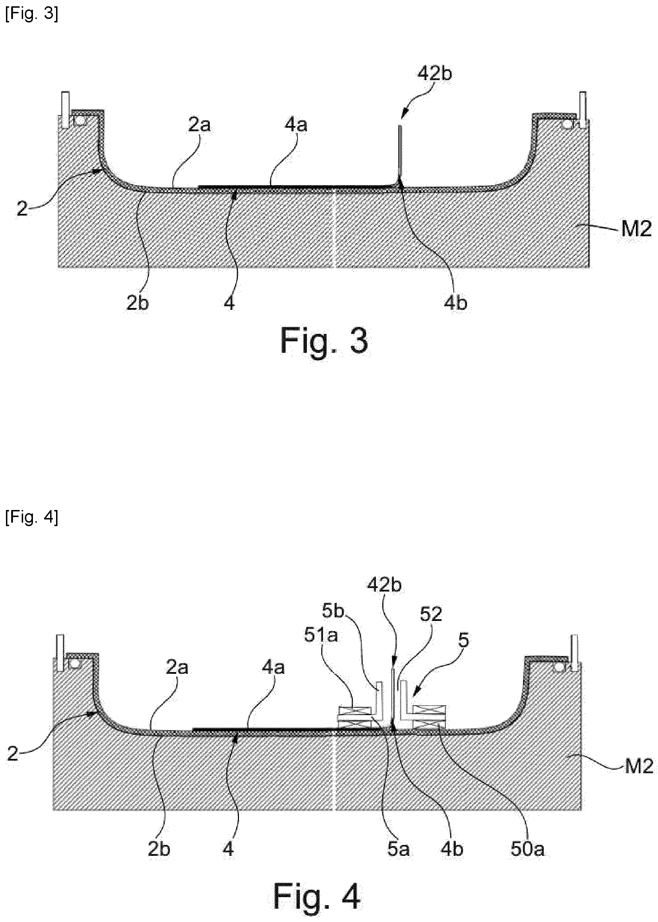

De préférence, la couche de confort 3 est une couche de matériau alvéolaire formée à partir d'une mousse liquide expansée, par exemple de type polyuréthane. La couche de confort 3 est préférentiellement réalisée par la technique du moussage dans un moule M de moussage dédié à l'injection d'une mousse P liquide expansive et dans lequel est préalablement chargé la couche support 1 et la couche d'aspect 2, chacune dans l'une des matrices M1, M2 du moule comme nous le verrons par la suite dans la description du procédé. Le moule M de moussage est configuré pour laisser, à l'état fermé du moule M, un espace de réception E de la mousse liquide entre la couche d'aspect 2 et la couche support 1. La mousse liquide expansive est injectée dans l'espace de réception E, puis va s'expanser pour former la couche de confort 3, comme nous le verrons par la suite (figures 3 à 8 illustrant notamment le procédé).

Une telle pièce de garniture (ou d'habillage) pour véhicule comprend, notamment, de manière non limitative, les tableaux de bord, les panneaux de portières (ou de portes), les panneaux de console centrale, les montants de fenêtres, les pièces d'ébénisterie analogues.

Une telle pièce de garniture comprend en outre au moins un élément fonctionnel 4 comprenant une partie fonctionnelle 4a appliquée contre la face interne 2a de la couche d'aspect 2 et une partie de connexion 4b (ou partie connectique) allongée. La partie de connexion 4b allongée, de préférence fine (ou plate), c'est-à-dire de faible épaisseur, peut ainsi former une extension par rapport à sa partie fonctionnelle 4a permettant la connexion électrique de la partie fonctionnelle 4a à une source d'alimentation/d'énergie électrique (non représentée) et/ou à un dispositif électrique/électronique (non représenté). La partie de connexion 4b allongée traverse préférentiellement successivement la couche de confort 3 et la couche support 1. Un tel élément fonctionnel 4 que l'on peut voir également sur les figures 14 et 15 peut assurer des fonctions particulières telles que, par exemple, le chauffage, l'éclairage, la détection, la mesure, la réception, la transmission, ou encore une fonction d'induction électromagnétique. Pour permettre son activation, un tel élément fonctionnel 4 nécessite donc d'être connecté, grâce à sa partie de connexion 4b allongée reliée électriquement à la partie fonctionnelle 4, à une source d'énergie électrique (non représentée) ou à un au moins un dispositif électronique (non représenté) lui-même pouvant être alimenté ou pouvant comprendre une source d'énergie électrique. Un tel dispositif électronique permet de transmettre des informations à l'élément fonctionnel 4 et/ou de traiter les informations/données générées et émises par l'élément fonctionnel 4.

Si on se réfère à nouveau aux figures 14 et 15, on peut voir que la partie fonctionnelle 4a d'un élément fonctionnel 4 comprend un support 40a, de préférence déformable pour s'adapter à la pièce de garniture. Le support 40a peut être un support 40a, par exemple, du type textile (non tissés, feutres, tissés, tricotés), film, peau, couche de matière plastique ou couche métallique. Un tel support 40a, notamment textile, est déformable. La partie fonctionnelle 4a comprend en outre une zone fonctionnelle 41a supportée par le support 40a et réalisant par exemple les fonctions précitées. De préférence, l'épaisseur d'un tel élément fonctionnel 4 est fine (ou plate ou faible), c'est-à-dire qu'elle est, de préférence, inférieure à 1mm, plus préférentiellement, inférieure à 0.5 mm, encore plus préférentiellement, comprise entre 0.05 et 0.2 mm.

La partie de connexion 4b allongée d'un tel élément fonctionnel 4 peut être, par exemple :
- (figures 14 et 15) une bande étendue 40b du support 40a de la partie fonctionnelle avec les conducteurs 41b,
- une extension des conducteurs depuis la partie fonctionnelle 4a, plus particulièrement sa zone fonctionnelle 41a,
- une extension des conducteurs 41b renforcée ou portée par un support annexe apposé ou enrobant.

De préférence, la partie fonctionnelle 4a de chaque élément fonctionnel 4 est enrobée dans la couche de confort 3.

Un tel élément fonctionnel 4 est connu de l'homme du métier et n'est pas décrit plus en détail dans la présente demande.

La couche d'aspect 2 peut être un revêtement, par exemple un revêtement textile, une peau, un film, une couche de décor naturelle telle que, par exemple, bois, pierre ou cuir.

Conformément à la présente invention, une telle pièce de garniture intérieure comprend en outre un dispositif d'étanchéité comprenant au moins une bague d'étanchéité 5 traversant la couche de confort 3 dans l'axe du ou de l'un des trou(s) 1b de passage auquel la bague d'étanchéité 5 est ainsi dédiée.

Toujours conformément à la présente invention, la ou chaque bague d'étanchéité 5 comporte :
- un passage 52 interne que traverse la ou au moins l'une des partie(s) de connexion 4b, par deux ouvertures respectivement d'entrée et de sortie du passage 52 interne, pour rejoindre et traverser la couche support 1 en passant dans le trou 1b de passage dédié. De préférence, le passage 52 interne traverse la bague axialement,
- et deux faces d'étanchéité 50a, 51a opposées, à savoir une première face d'étanchéité 50a comprenant l'ouverture d'entrée et étant en contact avec et/ou fixée sur la ou au moins l'une des partie(s) fonctionnelle(s) 4a et/ou sur la face interne 2a de la couche d'aspect 2 et une deuxième face d'étanchéité 51a en contact avec et/ou fixée sur la face interne 1a de la couche support 1 autour du trou 1b de passage dédié.

Toujours conformément à la présente invention, la couche de confort 3 s'étend entièrement en dehors du ou de chaque trou 1b de passage.

Le dispositif d'étanchéité permet de réaliser une étanchéité entre le ou chaque trou 1b de passage et la couche de confort 3 ayant pour effet que la couche de confort 3 s'étend entièrement en dehors du ou de chaque trou 1b de passage. On comprend que la couche de confort 3 s'étend également entièrement en dehors du passage 52 interne de la ou chaque bague d'étanchéité 5. Il permet ainsi d'empêcher, notamment lors de la réalisation de la pièce de garniture intérieure dans un moule M de moussage, plus particulièrement lors de l'injection d'une mousse P expansive liquide dans le moule M, par exemple une mousse P expansive liquide du type polyuréthane, que la mousse P s'introduise, notamment sous l'effet de son injection et/ou de son expansion, dans le(s) trou(s) 1b de passage en occasionnant ainsi des fuites de mousse P à travers la couche support 1.

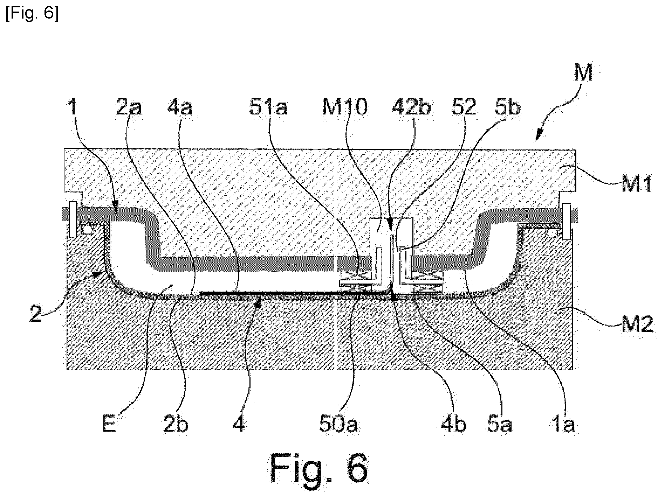

De préférence, comme on peut le voir notamment sur les figures 6, 7, 8, 12, 13, l'ouverture de sortie du passage 52 interne de la bague d'étanchéité 5 peut être située au-delà du trou 1b de passage dédié. Cette forme de réalisation permet d'assurer un guidage plus efficace de la ou chaque partie de connexion 4b à travers et au-delà du trou 1b de passage dédié. Dans une alternative, non illustrée, l'ouverture de sortie du passage 52 interne peut être située dans le trou 1b de passage dédié.

Dans une forme de réalisation préférentielle, la ou chaque bague d'étanchéité 5, comme on peut le voir sur les figures 4 à 13, peut présenter globalement une forme tubulaire comportant :
- une collerette 5a faisant saillie radialement et comportant les deux faces d'étanchéité 50a, 51a opposées,
- et une partie tubulaire 5b comportant l'ouverture de sortie du passage 52 interne de la bague d'étanchéité 5.

Dans une première forme de réalisation, comme on peut le voir sur les figures 9a, 9b, 9c, 9d et 10a, 10b, 10c, 10d la première face d'étanchéité 50a et/ou la deuxième face d'étanchéité 51a est/sont chacune rapportée dans la bague d'étanchéité 5. Les figures 4 à 9a, 9b, 9c, 9d montrent une forme de réalisation où les deux faces d'étanchéité 50a, 51a sont rapportées. Les figures 10a, 10b, 10c et 10d montrent une variante où seule la première face d'étanchéité 50a est rapportée. De préférence, comme on peut le voir sur les figures 4 à 10a, 10b, 10c, 10d, chaque face d'étanchéité 50a, 51a rapportée, c'est-à-dire la première face d'étanchéité 50a et/ou la deuxième face d'étanchéité 51a, peut être constituée par un joint d'étanchéité par compression, de préférence de forme torique ou annulaire, de préférence réalisé à partir d'un caoutchouc ou d'une mousse ou tout autre matière souple, compressible ou déformable élastiquement.

Dans une deuxième forme de réalisation, comme on peut le voir sur les figures 11a, 11b, 11c et 11d, la première face d'étanchéité 50a et/ou la deuxième face d'étanchéité 51a est/sont chacune intégrée dans la bague d'étanchéité 5 en étant directement constituées par la matière à partir de laquelle est fabriquée au moins une partie de la bague d'étanchéité 5. En outre, la matière peut être déformable élastiquement (ou, dit autrement, compressible ou souple) pour assurer une étanchéité de contact par la compression de la matière. Ainsi, dans la forme de réalisation de la bague d'étanchéité 5 comprenant la collerette 5a, au moins celle-ci (la collerette 5a), qui intègre les deux faces d'étanchéité 50a, 51a, peut être réalisée par une telle matière déformable élastiquement. Cette matière peut être réalisée par injection en mousse et peut être, de préférence, dans une mesure faible ou non négligeable, rigide.

Si on se réfère à nouveau aux figures 10a, 10b, 10c, 10d, notamment au figures 10c et 10d, on peut voir que le dispositif d'étanchéité peut comprendre en outre au moins une excroissance 11a, éventuellement déformable élastiquement, intégrée dans la face interne 1a de la couche support 1 en s'étendant autour du ou de l'un des trou(s) 1b de passage auquel est dédiée la ou l'une des bague(s) d'étanchéité 5. En outre, on peut voir sur la figure 10d que la deuxième face d'étanchéité 51a de la bague d'étanchéité 5 (dédiée) est en contact avec et/ou fixée sur l'excroissance 11a correspondante en assurant une étanchéité de contact. Dans une variante non représentée sur les figures annexées, l'excroissance peut être intégrée dans la bague d'étanchéité 5, le cas échéant dans la collerette 5a. Ainsi dans cette variante non illustrée, la deuxième face d'étanchéité 51a de la ou d'au moins l'une des bague(s) d'étanchéité 5 peut comprendre une excroissance, éventuellement déformable élastiquement, en contact avec et/ou fixée sur la face interne 1a de la couche support 1 autour du trou de passage 1b en assurant une étanchéité de contact. La deuxième face d'étanchéité 51a n'est pas nécessairement réalisée dans une matière déformable élastiquement. De préférence, l'excroissance d'étanchéité, qu'elle soit intégrée dans la face interne 1a de la couche support 1 ou dans la deuxième face d'étanchéité 50a de la bague d'étanchéité 5, le cas échéant de sa collerette 5a, peut présenter une forme circulaire ou annulaire. Lorsque l'excroissance 11a n'est pas déformable élastiquement, celle-ci est rigide et permet de réaliser, par sa rigidité et la surépaisseur créée, une poussée sur l'autre côté de la bague d'étanchéité 5 permettant de comprimer le joint d'étanchéité formant la première face d'étanchéité 50a. On comprend que l'excroissance 11a peut être réalisée, lorsqu'elle est intégrée dans la couche support 1, à partir du matériau constituant la couche support 1, plus particulièrement la face interne 1a de cette dernière ou, lorsqu'elle est intégrée dans la bague d'étanchéité 5 (dans sa deuxième face d'étanchéité 50a), à partir du matériau de la bague d'étanchéité 5, plus particulièrement du côté concerné de cette dernière ou de la collerette 5a.

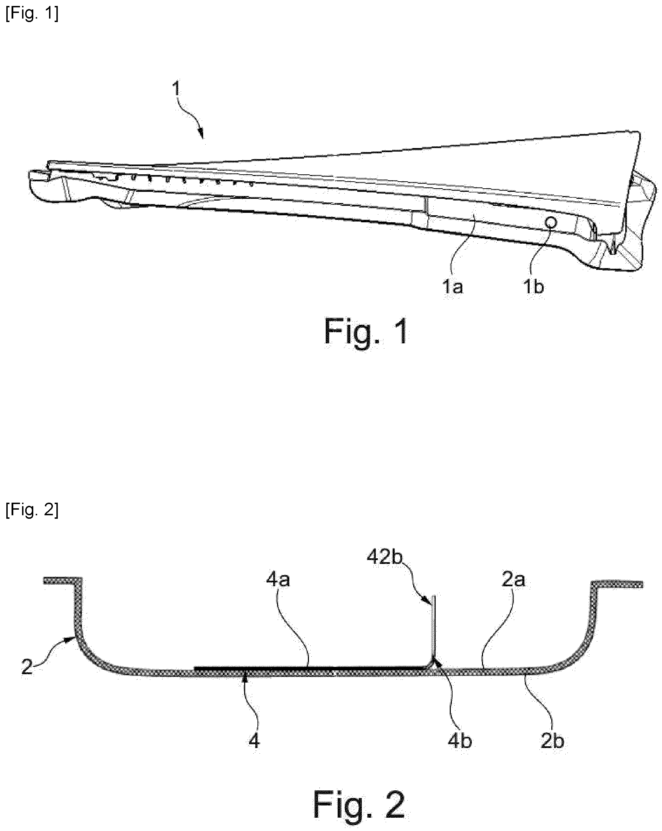

La figure 10 montre ainsi une forme de réalisation mixte, dans laquelle l'étanchéité au niveau de la bague d'étanchéité 5 peut être assurée, d'un côté (ou à l'une des extrémités) de la bague d'étanchéité 5, par la compression du joint d'étanchéité formant la première face d'étanchéité 50a sous l'effet de la poussée due à la présence l'excroissance 11a et de l'autre côté (ou à l'autre extrémité) de la bague d'étanchéité 5 par une étanchéité de contact, selon que l'excroissance 11a est intégrée dans la face interne 1a de la couche support 1 (cas de la figure 1) ou dans la bague d'étanchéité 5 (cas non illustré), entre l'excroissance 11a intégrée dans la face interne 1a de la couche support 1 et la deuxième face d'étanchéité 51a de la bague d'étanchéité 5 ou entre l'excroissance intégrée dans la deuxième face d'étanchéité 50a de la bague d'étanchéité 5 et la face interne 1a de la couche support 1.

Pour permettre la fixation sur les couches d'aspect et/ou support 1, 2 et/ou sur la partie fonctionnelle 4b du ou des éléments fonctionnel(s) 4, la première face d'étanchéité 50a peut être en outre revêtue d'un adhésif double face 53 (figures 11a, 11b, 11c, 11d) ou enduite d'une masse adhésive 54 (figures 4 à 10a, 10b, 10c, 10d) de sorte à permettre sa fixation sur la ou au moins l'une des partie(s) fonctionnelle(s) 4a et/ou sur la face interne 2a de la couche d'aspect 2. En outre, la deuxième face d'étanchéité 51a peut être également en outre revêtue d'un adhésif double face ou enduite d'une masse adhésive de sorte à permettre sa fixation sur la face interne 1a de la couche support 1 autour du trou 1b de passage dédié, le cas échéant sur l'excroissance 11a.

La présente invention a également pour objet un procédé de réalisation d'une pièce de garniture selon la présente invention.

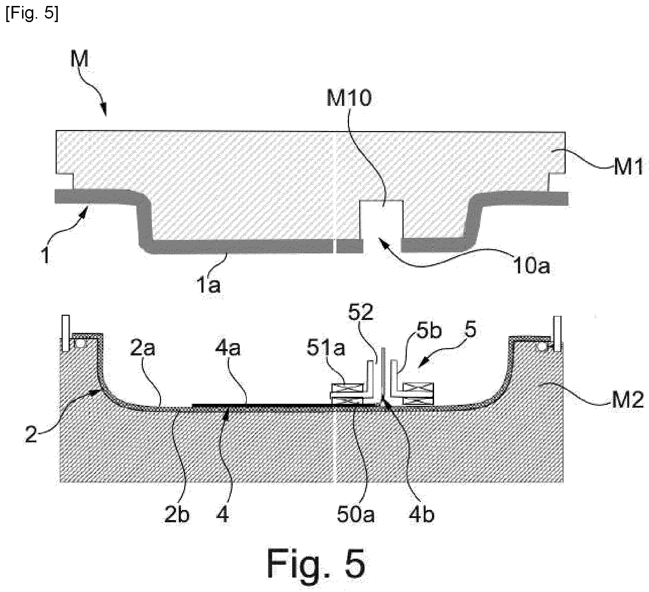

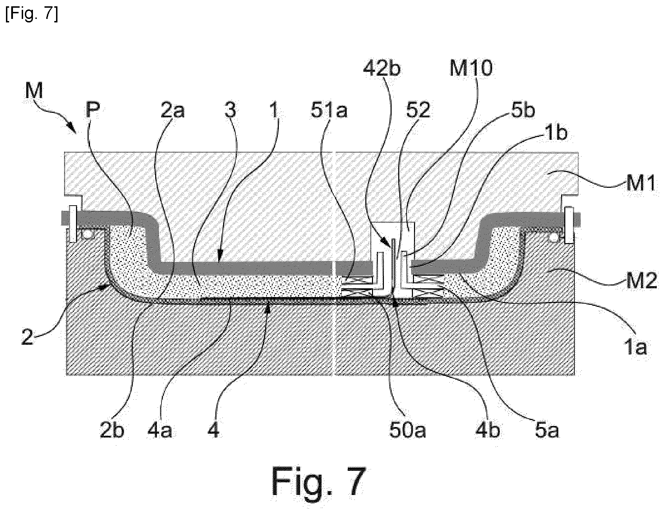

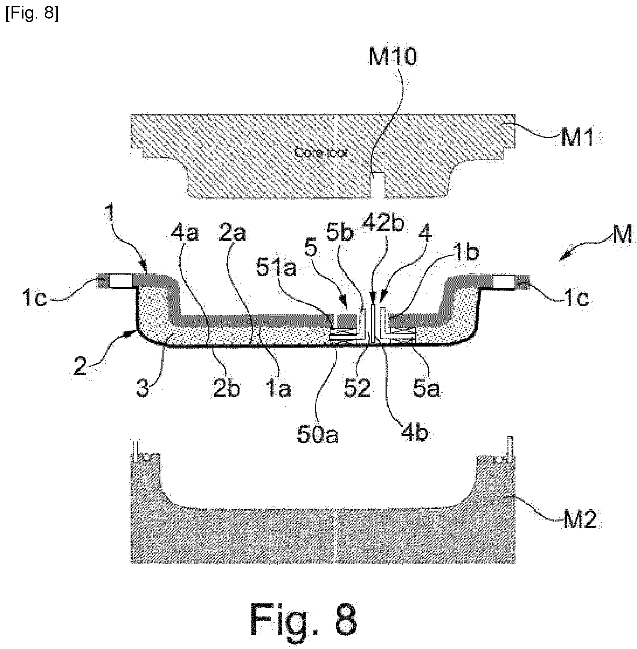

Conformément à la présente invention, le procédé consiste à réaliser les étapes suivantes en utilisant un moule M de moussage dédié à l'injection de mousse P liquide, par exemple une mousse P liquide du type polyuréthane, ledit moule M comprenant une première partie, dite matrice M1 (partie du moule en creux), et une deuxième partie, dite poinçon M2, dans laquelle (deuxième partie) est préalablement chargée la couche support 1 :
i) appliquer et fixer la partie fonctionnelle 4a du ou de chaque élément fonctionnel 4 sur la face interne 2a de la couche d'aspect 2 (figure 2),
ii) charger (en la disposant et la maintenant en position) la couche d'aspect 2 dans la matrice M1 avec sa face interne 2a tournée vers l'intérieur du moule M (figure 3),
iii) fixer la ou chaque bague d'étanchéité 5, par sa première face d'étanchéité 50a, sur la ou chaque partie fonctionnelle 4a dédiée et/ou sur la face interne 2a de la couche d'aspect 2 en insérant la ou les partie(s) de connexion 4b dédiée(s) dans le passage 52 interne de la ou des bague(s) d'étanchéité 5 de sorte que la ou chaque partie(s) de connexion 4b traverse la bague d'étanchéité 5 correspondante (figure 4),
iv) fermer le moule M avec la couche support 1. Le moule M est configuré de sorte que, lors de la fermeture, la ou chaque bague d'étanchéité 5 dédiée au ou à l'un des trou(s) 1b de passage 1b, d'une part, est disposée dans l'axe dudit trou 1b de passage dédié pour permettre l'insertion dans ledit trou 1b de passage dédié de la ou des parties de connexion 4b dédiée(s) et, d'autre part, vient en contact, par sa deuxième face d'étanchéité 51a, avec la face interne 1a de la couche support 1 autour du trou 1b de passage dédié (figures 4 et 5),
v) injecter, dans l'espace E séparant la couche d'aspect 2 et la couche support 1, une mousse expansive P (figures 6 et 7) (moussage dit à moule fermé) ou injecter préalablement à la fermeture du moule M entre l'étape iii) et l'étape iv) une mousse expansive P dans la matrice M1 (moussage dit à moule ouvert),
vi) après expansion et refroidissement de la mousse P entourant la ou les bague(s) d'étanchéité 5 en dehors du ou des trou(s) 1b de passage, ouvrir le moule M et démouler la pièce de garniture (figure 8).

A la suite de l'étape vi), la présente invention peut prévoir que les parties 1c qui dépassent (figure 8) soient ensuite éliminées, par exemple, par fraisage ou découpage, par jet d'eau ou par laser.

La matrice M1 du moule M peut comprendre au moins une cavité M10. La ou chaque cavité M10 est dédiée au ou à l'un des trou(s) 1b de passage et apte et destinée à recevoir, à l'état fermé du moule M, l'extrémité de connexion 42b de la ou des partie(s) de connexion 4b traversant la couche support 1 en passant dans le trou 1b de passage dédié (figures 6 et 7).

Pour réaliser l'étape iv), le moule M peut comprendre un dispositif de localisation, par exemple sous la forme de pions, ou d'excroissances d'indexage. Ces excroissances d'indexage peuvent également servir pour le positionnement précis de l'élément fonctionnel 4 ou des éléments fonctionnels 4 par adhésivage sur la couche d'aspect 2 telle qu'une peau. Un tel dispositif de localisation peut aussi consister en système de projection laser permettant d'afficher des marques ou des références délimitant la localisation destinée à l'élément fonctionnel 4 ou aux éléments fonctionnels 4.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Pièce de garniture intérieure pour véhicule, ladite pièce de garniture comprenant, d'une part, une couche support (1) présentant une face interne (1a) comportant au moins un trou (1b) de passage traversant la couche support (1), une couche d'aspect (2) présentant une face interne (2a) tournée vers la face interne (1a) de la couche support (1) et une face externe (2b) définissant une face apparente de la pièce de garniture et une couche de confort (3) s'étendant entre la couche d'aspect (2) et la couche support (1) et, d'autre part, au moins un élément fonctionnel (4) comprenant une partie fonctionnelle (4a) appliquée contre la face interne (2a) de la couche d'aspect (2) et une partie de connexion (4b) allongée, la partie de connexion (4b) allongée, de préférence fine ou plate, c'est-à-dire de faible épaisseur, forme une extension par rapport à sa partie fonctionnelle (4a) permettant la connexion électrique de la partie fonctionnelle (4a) à une source d'alimentation/d'énergie électrique et/ou à un dispositif électrique/électronique, **caractérisée en ce qu'**elle comprend en outre un dispositif d'étanchéité comprenant au moins une bague d'étanchéité (5) traversant la couche de confort (3) dans l'axe du ou de l'un des trou(s) (1b) de passage auquel elle est ainsi dédiée et comportant, d'une part, un passage (52) interne que traverse la ou au moins l'une des partie(s) de connexion (4b), par deux ouvertures respectivement d'entrée et de sortie du passage (52) interne, pour rejoindre et traverser la couche support (1) en passant dans le trou (1b) de passage dédié et, d'autre part, deux faces d'étanchéité (50a, 51a) opposées, à savoir une première face d'étanchéité (50a) comprenant l'ouverture d'entrée et étant en contact avec et/ou fixée sur la ou au moins l'une des partie(s) fonctionnelle(s) (4a) et/ou sur la face interne (2a) de la couche d'aspect (2) et une deuxième face d'étanchéité (51a) en contact avec et/ou fixée sur la face interne (1a) de la couche support (1) autour du trou (1b) de passage dédié, la couche de confort (3) s'étendant entièrement en dehors du ou de chaque trou (1b) de passage.

2. Pièce de garniture intérieure, selon la revendication 1, **caractérisée en ce que** l'ouverture de sortie du passage (52) interne de la bague d'étanchéité (5) est située dans le ou au-delà du trou (1b) de passage dédié.

3. Pièce de garniture intérieure, selon l'une quelconque des revendications 1 à 2, **caractérisée en ce que** la ou chaque bague d'étanchéité (5) présente globalement une forme tubulaire comportant, d'une part, une collerette (5a) faisant saillie radialement et comportant les deux faces d'étanchéité (50a, 51a) opposées et, d'autre part, une partie tubulaire (5b) comportant l'ouverture de sortie du passage (52) interne de la bague d'étanchéité (5).

4. Pièce de garniture intérieure, selon l'une quelconque des revendications 1 à 3, **caractérisée en ce que** la première face d'étanchéité (50a) et/ou la deuxième face d'étanchéité (51a) est/sont chacune rapportée dans la bague d'étanchéité (5) et constituée par un joint d'étanchéité par compression, de préférence de forme torique ou annulaire, de préférence réalisé à partir d'un caoutchouc ou d'une mousse ou tout autre matière souple, compressible ou déformable élastiquement.

5. Pièce de garniture intérieure, selon l'une quelconque des revendications 1 à 4, **caractérisée en ce que** la première face d'étanchéité (50a) et/ou la deuxième face d'étanchéité (51a) est/sont chacune intégrée dans la bague d'étanchéité (5) en étant directement constituées par la matière à partir de laquelle est fabriquée au moins une partie de la bague d'étanchéité (5) et **en ce que** la matière est déformable élastiquement pour assurer une étanchéité de contact par compression de la matière.

6. Pièce de garniture intérieure, selon l'une quelconque des revendications 1 à 5, **caractérisée en ce que** le dispositif d'étanchéité comprend en outre au moins une excroissance (11a), éventuellement déformable élastiquement, et intégrée dans la face interne (1a) de la couche support (1) en s'étendant autour du ou de l'un des trou(s) (1b) de passage auquel est dédiée la ou l'une des bague(s) d'étanchéité (5) et **en ce que** la deuxième face d'étanchéité (51a) de la bague d'étanchéité (5) est en contact avec et/ou fixée sur l'excroissance (11a) correspondante en assurant une étanchéité de contact.

7. Pièce de garniture intérieure, selon l'une quelconque des revendications 1 à 5, **caractérisée en ce que** la deuxième face d'étanchéité (51a) de la ou d'au moins l'une des bague(s) d'étanchéité (5) comprend une excroissance, éventuellement déformable élastiquement, en contact avec et/ou fixée sur la face interne (1a) de la couche support (1) autour du trou de passage (1b) en assurant une étanchéité de contact.

8. Pièce de garniture intérieure, selon l'une quelconque des revendications 1 à 7, **caractérisée en ce que** la première face d'étanchéité (50a) est en outre revêtue d'un adhésif double face (53) ou enduite d'une masse adhésive (54) de sorte à permettre sa fixation sur la ou au moins l'une des partie(s) fonctionnelle(s) (4a) et/ou sur la face interne (2a) de la couche d'aspect (2), et/ou la deuxième face d'étanchéité (51a) est en outre revêtue d'un adhésif double face ou enduite d'une masse adhésive de sorte à permettre sa fixation sur la face interne (1a) de la couche support (1) autour du trou (1b) de passage dédié.

9. Procédé de réalisation d'une pièce de garniture selon l'une quelconque des revendications 1 à 8, **caractérisé en ce qu'**il consiste à réaliser les étapes suivantes, en utilisant un moule (M) de moussage dédié à l'injection de mousse expansive (P) liquide, par exemple une mousse expansive liquide du type polyuréthane, ledit moule (M) comprenant une matrice (M1) et un poinçon (M2) dans lequel est préalablement chargée la couche support (1),
- i) appliquer et fixer la partie fonctionnelle (4a) du ou de chaque élément fonctionnel (4) sur la face interne (2a) de la couche d'aspect (2),
- ii) charger la couche d'aspect (2) dans la matrice (M1) avec sa face interne (2a) tournée vers l'intérieur du moule (M),
- iii) fixer la ou chaque bague d'étanchéité (5), par sa première face d'étanchéité (50a), sur la ou chaque partie fonctionnelle (4a) dédiée et/ou sur la face interne (2a) de la couche d'aspect (2) en insérant la ou les partie(s) de connexion (4b) dédiée(s) dans le passage (52) interne de la ou des bague(s) d'étanchéité (5) de sorte que la ou chaque partie(s) de connexion (4b) traverse la bague d'étanchéité (5) correspondante,
- iv) fermer le moule (M) avec la couche support (1), ledit moule (M) étant configuré de sorte que, lors de la fermeture, la ou chaque bague d'étanchéité (5) dédiée au ou à l'un des trou(s) de passage (1b), d'une part, est disposée dans l'axe dudit trou (1b) de passage dédié pour permettre l'insertion dans ledit trou (1b) de passage dédié de la ou des parties de connexion (4b) dédiée(s) et, d'autre part, vient en contact, par sa deuxième face d'étanchéité (51a), avec la face interne (1a) de la couche support (1) autour du trou (1b) de passage dédié,
- v) injecter, dans l'espace (E) séparant la couche d'aspect (2) et la couche support (1), une mousse expansive (P) ou injecter préalablement à la fermeture du moule (M) entre l'étape iii) et l'étape iv) une mousse expansive (P) dans la matrice (M1),
- vi) après expansion et refroidissement de la mousse (P) entourant la ou les bague(s) d'étanchéité (5) en dehors du ou des trou(s) (1b) de passage, ouvrir le moule (M) et démouler la pièce de garniture.

## Patentansprüche

1. Innenverkleidungsteil für ein Fahrzeug, wobei das Verkleidungsteil Folgendes umfasst: einerseits eine Trägerschicht (1), die eine Innenseite (1a) mit mindestens einem die Trägerschicht (1) durchquerenden Durchgangsloch (1b), eine Dekorschicht (2) mit einer zur Innenseite (1a) der Trägerschicht (1) ausgerichteten Innenseite (2a) und einer Außenseite (2b), die eine sichtbare Seite des Verkleidungsteils definiert, und eine Komfortschicht (3), die sich zwischen der Dekorschicht (2) und der Trägerschicht (1) erstreckt, aufweist, und andererseits mindestens ein Funktionselement (4) mit einem Funktionsteil (4a), der an der Innenseite (2a) der Dekorschicht (2) anliegt, und einem länglichen Verbindungsteil (4b), wobei der längliche Verbindungsteil (4b), der vorzugsweise fein oder flach ist, d. h. eine geringe Dicke aufweist, in Bezug auf seinen Funktionsteil (4a) eine Verlängerung ausbildet, die die elektrische Verbindung des Funktionsteils (4a) mit einer Versorgungs-/Stromquelle und/oder mit einer elektrischen/elektronischen Vorrichtung ermöglicht, **dadurch gekennzeichnet, dass** es ferner eine Dichtungsvorrichtung umfasst, die zumindest einen Dichtungsring (5) aufweist, der die Komfortschicht (3) in der Achse des bzw. des einen der Durchgangslöcher (1b), für das er somit vorgesehen ist, durchquert und Folgendes aufweist: einerseits einen inneren Durchgang (52), den das bzw. das mindestens eine der Verbindungsteile (4b) durch zwei Öffnungen, eine Eingangs- und eine Ausgangsöffnung, des inneren Durchgangs (52) durchquert, um, durch das Durchgangsloch (1b) verlaufend, die Trägerschicht (1) zu erreichen und zu durchqueren, und andererseits zwei gegenüberliegende Dichtungsflächen (50a, 51a), und zwar eine erste Dichtungsfläche (50a), die die Eingangsöffnung umfasst und mit dem bzw. mindestens einem der Funktionsteile (4a) in Kontakt steht und/oder daran befestigt ist und/oder an der Innenseite (2a) der Dekorschicht (2) befestigt ist, und eine zweite Dichtungsfläche (51a), die mit der Innenseite (1a) der Trägerschicht (1) um das vorgesehene Durchgangsloch (1b) in Kontakt steht und/oder daran befestigt ist, wobei sich die Komfortschicht (3) vollständig außerhalb des bzw. jedes Durchgangslochs (1b) erstreckt.

2. Innenverkleidungsteil nach Anspruch 1, **dadurch gekennzeichnet, dass** sich die Ausgangsöffnung des inneren Durchgangs (52) des Dichtungsrings (5) innerhalb oder außerhalb des dafür vorgesehenen Durchgangslochs (1b) befindet.

3. Innenverkleidungsteil nach einem der Ansprüche 1 bis 2, **dadurch gekennzeichnet, dass** der oder jeder Dichtungsring (5) im Allgemeinen eine rohrförmige Form aufweist, die Folgendes aufweist: einerseits einen Hals (5a), der radial vorsteht und die beiden gegenüberliegenden Dichtungsflächen (50a, 51a) aufweist, und andererseits einen rohrförmigen Teil (5b), der die Ausgangsöffnung des inneren Durchgangs (52) des Dichtungsrings (5) aufweist.

4. Innenverkleidungsteil nach einem der Ansprüche 1 bis 3, **dadurch gekennzeichnet, dass** die erste Dichtungsfläche (50a) und/oder die zweite Dichtungsfläche (51a) jeweils im Dichtungsring (5) angebracht und aus einer vorzugsweise torus- oder ringförmigen Kompressionsdichtung gebildet ist/sind, die vorzugsweise aus Kautschuk oder einem Schaum oder einem anderen komprimierbaren oder elastisch verformbaren weichen Material hergestellt ist.

5. Innenverkleidungsteil nach einem der Ansprüche 1 bis 4, **dadurch gekennzeichnet, dass** die erste Dichtungsfläche (50a) und/oder die zweite Dichtungsfläche (51a) jeweils in einen Dichtungsring (5) integriert ist/sind, indem sie direkt aus dem Material gebildet ist/sind, aus dem zumindest ein Teil des Dichtungsrings (5) hergestellt ist, und dass das Material elastisch verformbar ist, um durch Kompression des Materials eine Kontaktdichtung zu gewährleisten.

6. Innenverkleidungsteil nach einem der Ansprüche 1 bis 5, **dadurch gekennzeichnet, dass** die Dichtungsvorrichtung ferner mindestens eine gegebenenfalls elastisch verformbare Ausstülpung (11a) umfasst, die in die Innenseite (1a) der Trägerschicht (1) integriert ist, indem sie sich um das bzw. das eine der Durchgangslöcher (1b), für die der bzw. der eine der Dichtungsringe (5) vorgesehen ist, erstreckt, und dass die zweite Dichtungsfläche (51a) des Dichtungsrings (5) mit der entsprechenden Ausstülpung (11a) in Kontakt steht und/oder daran befestigt ist und so eine Kontaktdichtung gewährleistet.

7. Innenverkleidungsteil nach einem der Ansprüche 1 bis 5, **dadurch gekennzeichnet, dass** die zweite Dichtungsfläche (51a) des bzw. des mindestens einen der Dichtungsringe (5) eine gegebenenfalls verformbare Ausstülpung umfasst, die mit der Innenseite (1a) der Trägerschicht (1) um das Durchgangsloch (1b) in Kontakt steht und/oder daran befestigt ist und so eine Kontaktdichtung gewährleistet.

8. Innenverkleidungsteil nach einem der Ansprüche 1 bis 7, **dadurch gekennzeichnet, dass** die erste Dichtungsfläche (50a) ferner mit einem doppelseitigen Klebeband (53) versehen oder mit einer Klebemasse (54) bestrichen ist, um ihre Befestigung an dem bzw. zumindest dem einen der Funktionsteile (4a) und/oder an der Innenseite (2a) der Dekorschicht (2) zu ermöglichen, und/oder dass die zweite Dichtungsfläche (51a) ferner mit einem doppelseitigen Klebeband versehen oder mit einer Klebemasse bestrichen ist, um ihre Befestigung an der Innenseite (1a) der Trägerschicht (1) um das vorgesehene Durchgangsloch (1b) zu ermöglichen.

9. Verfahren zur Herstellung eines Verkleidungsteils nach einem der Ansprüche 1 bis 8, **dadurch gekennzeichnet, dass** es in der Ausführung der folgenden Schritte unter Verwendung einer Schäumform (M) zum Einspritzen von flüssigem Expansionsschaum (P), beispielsweise einem flüssigen Expansionsschaum des Typs Polyurethan, besteht, wobei die Form (M) eine Matrize (M1) und einen Stempel (M2) umfasst, in den zuvor die Trägerschicht (1) eingelegt wurde,
- i) Anbringen und Befestigen des Funktionsteils (4a) des bzw. jedes Funktionselements (4) an der Innenseite (2a) der Dekorschicht (2),
- ii) Einlegen der Dekorschicht (2) in die Matrize (M1), wobei ihre Innenseite (2a) der Innenseite der Form (M) zugewandt ist,
- iii) Befestigen des bzw. jedes Dichtungsrings (5) mit seiner ersten Dichtungsfläche (50a) an dem bzw. jedem vorgesehenen Funktionsteil (4a) und/oder an der Innenseite (2a) der Dekorschicht (2) durch Einsetzen des bzw. der vorgesehenen Verbindungsteile (4b) in den inneren Durchgang (52) des bzw. der Dichtungsringe (5), sodass der bzw. jeder Verbindungsteil (4b) den entsprechenden Dichtungsring (5) durchquert,
- iv) Schließen der Form (M) mit der Trägerschicht (1), wobei die Form (M) dazu ausgelegt ist, dass beim Schließen der bzw. jeder vorgesehene Dichtungsring (5) an dem bzw. dem einen der Durchgangslöcher (1b) einerseits in der Achse des vorgesehenen Durchgangslochs (1b) angeordnet ist, um das Einsetzen des bzw. der vorgesehenen Verbindungsteile (4b) in das vorgesehene Durchgangsloch (1b) zu ermöglichen, und andererseits durch seine zweite Dichtungsfläche (51a) mit der Innenseite (1a) der Trägerschicht (1) um das vorgesehene Durchgangsloch (1b) in Kontakt kommt,
- v) Einspritzen eines Expansionsschaums (P) in den Raum (E), der die Dekorschicht (2) und die Trägerschicht (1) trennt, oder Einspritzen eines Expansionsschaums (P) in die Matrize (M1) vor dem Schließen der Form (M) zwischen dem Schritt iii) und dem Schritt iv),
- vi) nach Expansion und Abkühlen des Schaums (P), der den bzw. die Dichtungsringe (5) außerhalb des bzw. der Durchgangslöcher (1b) umgibt, Öffnen der Form (M) und Herausnehmen des Verkleidungsteils.

## Claims

1. Inner trim component for a vehicle, said trim component comprising, on the one hand, a support layer (1) having an internal face (1a) having at least one passage hole (1b) passing through the support layer (1), an appearance layer (2) having an internal face (2a) turned towards the internal face (1a) of the support layer (1) and an external face (2b) defining a visible face of the trim component and a comfort layer (3) extending between the appearance layer (2) and the support layer (1) and, on the other hand, at least one functional element (4) comprising a functional part (4a) pressed against the internal face (2a) of the appearance layer (2) and an elongate connection part (4b), the elongate connection part (4b), which is preferably thin or flat, i.e. of small thickness, forming an extension with respect to its functional part (4a) allowing the electrical connection of the functional part (4a) to an electrical energy/power source and/or to an electrical/electronic device, **characterized in that** it further comprises a sealing device comprising at least one sealing ring (5) passing through the comfort layer (3) concentrically with the or one of the passage hole(s) (1b) to which it is thus dedicated and having, on the one hand, an internal passage (52) that the or at least one of the connection part(s) (4b) passes through, via two openings, respectively an inlet opening and an and outlet opening, of the internal passage (52), to meet and pass through the support layer (1), passing through the dedicated passage hole (1b) and, on the other hand, two opposite sealing faces (50a, 51a), namely a first sealing face (50a) comprising the inlet opening and being in contact with and/or fastened to the or at least one of the functional part(s) (4a) and/or to the internal face (2a) of the appearance layer (2) and a second sealing face (51a) in contact with and/or fastened to the internal face (1a) of the support layer (1) around the dedicated passage hole (1b), the comfort layer (3) extending entirely outside the or each passage hole (1b).

2. Inner trim component, according to Claim 1, **characterized in that** the outlet opening of the internal passage (52) of the sealing ring (5) is situated in or beyond the dedicated passage hole (1b).

3. Inner trim component, according to either one of Claims 1 and 2, **characterized in that** the or each sealing ring (5) generally has a tubular shape having, on the one hand, a collar (5a) that projects radially and has the two opposite sealing faces (50a, 51a) and, on the other hand, a tubular part (5b) having the outlet opening of the internal passage (52) of the sealing ring (5).

4. Inner trim component, according to any one of Claims 1 to 3, **characterized in that** the first sealing face (50a) and/or the second sealing face (51a) is/are each added into the sealing ring (5) and constituted by a compression seal, preferably of toroidal or annular shape, preferably made from a rubber or a foam or any other flexible, compressible or elastically deformable material.

5. Inner trim component, according to any one of Claims 1 to 4, **characterized in that** the first sealing face (50a) and/or the second sealing face (51a) is/are each integrated in the sealing ring (5), being directly constituted by the material from which at least a part of the sealing ring (5) is manufactured, and **in that** the material is elastically deformable to ensure contact sealing by compression of the material.

6. Inner trim component, according to any one of Claims 1 to 5, **characterized in that** the sealing device further comprises at least one protrusion (11a), which is optionally elastically deformable, and integrated in the internal face (1a) of the support layer (1), extending around the or one of the passage hole(s) (1b) to which the or one of the sealing ring(s) (5) is dedicated, and **in that** the second sealing face (51a) of the sealing ring (5) is in contact with and/or fastened to the corresponding protrusion (11a), ensuring contact sealing.

7. Inner trim component, according to any one of Claims 1 to 5, **characterized in that** the second sealing face (51a) of the or at least one of the sealing ring(s) (5) comprises a protrusion, which is optionally elastically deformable, in contact with and/or fastened to the internal face (1a) of the support layer (1) around the passage hole (1b), ensuring contact sealing.

8. Inner trim component, according to any one of Claims 1 to 7, **characterized in that** the first sealing face (50a) is also covered with a double-sided adhesive (53) or coated with an adhesive mass (54) so as to allow it to be fastened to the or at least one of the functional part(s) (4a) and/or to the internal face (2a) of the appearance layer (2), and/or the second sealing face (51a) is also covered with a double-sided adhesive or coated with an adhesive mass so as to allow it to be fastened to the internal face (1a) of the support layer (1) around the dedicated passage hole (1b).

9. Method for producing a trim component according to any one of Claims 1 to 8, **characterized in that** it consists in carrying out the following steps, using a foaming mould (M) dedicated to the injection of liquid expanding foam (P), for example a liquid expanding foam of the polyurethane type, said mould (M) comprising a die (M1) and a punch (M2) into which the support layer (1) is loaded beforehand,
- i) pressing and fastening the functional part (4a) of the or each functional element (4) onto the internal face (2a) of the appearance layer (2),
- ii) loading the appearance layer (2) into the die (M1) with its internal face (2a) turned towards the inside of the mould (M),
- iii) fastening the or each sealing ring (5), via its first sealing face (50a), to the or each dedicated functional part (4a) and/or to the internal face (2a) of the appearance layer (2) by inserting the one or more dedicated connection part(s) (4b) into the internal passage (52) of the one or more sealing ring(s) (5) such that the or each connection part(s) (4b) passes through the corresponding sealing ring (5),
- iv) closing the mould (M) with the support layer (1), said mould (M) being configured such that, during the closure, the or each sealing ring (5) dedicated to the or one of the passage hole(s) (1b), on the one hand, is disposed concentrically with said dedicated passage hole (1b) to allow the insertion into said dedicated passage hole (1b) of the one or more dedicated connection part(s) (4b) and, on the other hand, comes into contact, via its second sealing face (51a), with the internal face (1a) of the support layer (1) around the dedicated passage hole (1b),
- v) injecting an expanding foam (P) into the space (E) separating the appearance layer (2) and the support layer (1), or injecting an expanding foam (P) into the die (M1) prior to the closure of the mould (M) between step iii) and step iv),
- vi) after expansion and cooling of the foam (P), surrounding the one or more sealing ring(s) (5) outside the one or more passage hole(s) (1b), opening the mould (M) and demoulding the trim component.
